(19) Europäisches Patentamt
European Patent Office
Office européen des brevets

(11) **EP 2 548 301 B1**

(12) **EUROPÄISCHE PATENTSCHRIFT**

(45) Veröffentlichungstag und Bekanntmachung des Hinweises auf die Patenterteilung:
**17.06.2015 Patentblatt 2015/25**

(21) Anmeldenummer: **11708254.5**

(22) Anmeldetag: **15.03.2011**

(51) Int Cl.:
*H02P 23/12* *(2006.01)*　　*B65H 51/32* *(2006.01)*
*D02J 1/22* *(2006.01)*　　*D02J 13/00* *(2006.01)*
*H02K 29/12* *(2006.01)*　　*H02P 21/00* *(2006.01)*

(86) Internationale Anmeldenummer:
**PCT/EP2011/053842**

(87) Internationale Veröffentlichungsnummer:
**WO 2011/113810 (22.09.2011 Gazette 2011/38)**

(54) **VERFAHREN UND VORRICHTUNG ZUR BESTIMMUNG DER SCHLUPFFREQUENZ UND ZUR REGELUNG EINES ASYNCHRONMOTORS**

METHOD AND DEVICE FOR THE DETERMINATION OF SLIP FREQUENCY AND FOR THE AUTOMATIC CONTROL OF AN ASYNCHRONOUS MOTOR

PROCÉDÉ ET DISPOSITIF POUR DÉTERMINER LA FRÉQUENCE DE GLISSEMENT ET POUR RÉGLER UN MOTEUR ASYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2010 DE 102010014894**
**16.03.2010 DE 102010011482**

(43) Veröffentlichungstag der Anmeldung:
**23.01.2013 Patentblatt 2013/04**

(73) Patentinhaber: **Ritter Elektronik GmbH**
**42897 Remscheid (DE)**

(72) Erfinder:
• **RÜTER, Markus**
**45770 Marl (DE)**
• **OBERSCHELP, Wolfgang**
**58135 Hagen (DE)**
• **BAADER, Uwe**
**42111 Wuppertal (DE)**

(74) Vertreter: **Kahlhöfer, Hermann**
**KNH Patentanwälte Kahlhöfer Neumann**
**Rößler Heine PartG mbB**
**Postfach 10 33 63**
**40024 Düsseldorf (DE)**

(56) Entgegenhaltungen:
**JP-A- 1 218 343　　US-A- 5 729 113**
**US-B2- 7 180 262**

• **RUTER M ET AL: "A sensorless speed acquisition method for induction machines", INDUSTRIAL ELECTRONICS, 2009. ISIE 2009. IEEE INTERNATIONAL SYMPOSIUM ON, IEEE, PISCATAWAY, NJ, USA, 5. Juli 2009 (2009-07-05), Seiten 538-543, XP031518468, ISBN: 978-1-4244-4347-5 in der Anmeldung erwähnt**
• **BRUNSBACH B J ET AL: "Einsatz eines Kalman-Filters zum feldorientierten Betrieb einer Asynchronmaschine ohne mechanische Sensore = Field-oriented control of an induction motor without mechanical sensors using a Kalman-Filter", ELECTRICAL ENGINEERING, SPRINGER, BERLIN, DE, Bd. 73, Nr. 5, 1. September 1990 (1990-09-01), Seiten 325-335, XP009130760, ISSN: 0948-7921**

EP 2 548 301 B1

**Beschreibung**

Die vorliegende Erfindung liegt auf dem Gebiet der Regelung oder Überwachung von Asynchronmotoren. Solche Motoren werden in großem Umfang zum Antrieb von Maschinen und Komponenten eingesetzt. Bei vielen Anwendungen kommt es auf eine genaue Regelung und häufig auch auf eine möglichst genaue Einhaltung bestimmter Drehzahlen an.

Es sind daher auch verschiedene Systeme zur Regelung von Asynchronmotoren bekannt, wobei bevorzugt solche Systeme eingesetzt werden, bei denen nur Spannungs- und oder Strommesswerte, die abhängig von den Magnetfeldern im Asynchronmotor sind, zur Gewinnung von Informationen über den Betriebszustand genutzt werden. Wie weiter unten näher erläutert, gibt es relativ genau arbeitende Modelle, insbesondere feldorientierte Modelle, die den Zustand eines Asynchronmotors mit großer Genauigkeit abbilden und in vielen Fällen für eine Regelung genutzt werden und auch zufriedenstellend arbeiten.

Aus der US 5 729 113 A ist beispielsweise die Regelung eines Asynchronmotors mittels eines Modells bekannt, dem zeitabhängige Spannungs- und/oder Strommesswerte zugeführt werden, die abhängig von den im Asynchronmotor auftretenden Magnetfeldern sind, wobei mindestens ein variabler Parameter im Modell berücksichtigt wird.

Aus der US 7 180 262 B2 ist außerdem die sensorlose Erfassung einer Rotorposition eines Asynchronmotors durch Auswertung einer magnetischen Anisotropie des Rotors bekannt.

Die JP 1 218343 A offenbart einen Rotor eines Asynchronmotors mit einer durch geeignete Ausrichtung der Blechpakete erhöhten Anisotropie.

Trotzdem gibt es Anwendungen, bei denen es auf eine besonders präzise Regelung der Drehzahl ankommt. Für solche Anwendungen sind bisher gesonderte Drehzahlgeber erforderlich, da Asynchronmotoren aufgrund ihres systembedingten Schlupfes eine Drehzahlmessung mit hoher Präzision allein anhand der vorhandenen Modelle nicht zulassen.

Ausgehend von dieser Situation hat es in den vergangenen Jahren Bemühungen gegeben, den Rotor eines Asynchronmotors definiert so zu verändern, dass er ein nicht rotationssymmetrisches magnetisches Verhalten aufweist, also eine Anisotropie der magnetischen Eigenschaften in verschiedenen radialen Richtungen. Solche Anisotropien haben Auswirkungen auf das Magnetfeld während des Betriebes und können durch Spannungs- bzw. Strommessungen gemessen werden. Dies ist beispielsweise in einer Publikation von Rüter, M.; Baader, U.; Oberschelp, W.; Schröder, G.: "Eine geberlose Drehzahlerfassung für Asynchronmaschinen, VDE/VDI-Tagung, September 2008, Böblingen und in einem Vortrag "A sensorless speed aquisition method for induction maschines" von Rüter, Markus; Baader, Uwe; Oberschelp, Wolfgang; und Schröder, Günter auf den ISIE 2009 - IEEE International Symposon on Industrial Electronics, July 5-8, 2009. Seoul, Korea, vorgetragen worden, auf die hier vollinhaltlich Bezug genommen wird.

Eine Anisotropie des Rotors eines Asynchronmotors erlaubt die Messung der sogenannten Schlupffrequenz, das heißt der Differenz zwischen der Drehfeldfrequenz, das heißt der Rotationsfrequenz des Magnetfeldes des Stators des Asynchronmotors und/oder die Änderung des magnetischen Feldes aus Sicht des fest stehenden Stators zur tatsächlichen Rotationsfrequenz des Rotors, insbesondere der Differenz der Drehfeldfrequenz und der durch die Bauweise des Asynchronmotors bedingten elektrisch wirksamen Rotationsfrequenz des Rotors. Auf diese Weise kann bei bekannter Drehfeldfrequenz die tatsächliche Rotationsfrequenz des Rotors, also seine tatsächliche Drehzahl, bestimmt werden. Die praktische Bedeutung dieser Möglichkeit wurde zunächst als gering eingeschätzt, weil einerseits Änderungen an den Rotoren von Asynchronmotoren zur Ausnutzung des Prinzips als erforderlich angesehen wurden und andererseits weil sich die relativ niedrige Schlupffrequenz scheinbar zur Regelung von transienten Vorgängen, z. B. bei Laständerungen oder Drehzahländerungen eines Asynchronmotors nicht besonders gut eignet.

Ausgehend von diesem Stand der Technik ist es Aufgabe der vorliegenden Erfindung, das Messprinzip der Ausnutzung einer magnetischen Anisotropie des Rotors eines Asynchronmotors zu verbessern, auf zusätzliche Anwendungsfälle anwendbar zu machen und dadurch die Regelung von Asynchronmotoren bezüglich der Einhaltung einer gewünschten Drehzahl zu verbessern.

Zur Lösung dieser Aufgaben werden ein Verfahren gemäß dem Anspruch 1 und eine Vorrichtung gemäß dem Anspruch 7 vorgeschlagen. Vorteilhafte Ausgestaltungen sind in den jeweils abhängigen Ansprüchen angegeben.

Das erfindungsgemäße Verfahren dient zur Verbesserung der Regelung eines Asynchronmotors mit einem Stator und einem eine magnetische Anisotropie aufweisenden Rotor, wobei der Asynchronmotor mittels eines Modells geregelt wird, insbesondere mittels eines feldorientiertes Regelmodells, welchem zeitabhängige Spannungs- und/oder Strommesswerte, die abhängig von den im Asynchronmotor auftretenden Magnetfeldern sind, zugeführt werden, und wobei das Modell mindestens einen variablen Parameter berücksichtigt, wobei weiter die durch die magnetische Anisotropie des Rotors in den Strom und/oder Spannungsmesswerten erzeugten Schwankungen in einem Anisotropieauswerter ausgewertet und daraus eine aktuelle Schlupffrequenz und/oder Drehzahl des Rotors ermittelt wird. Dies wird dadurch erreicht, dass durch Vergleich der im Anisotropieauswerter gewonnenen aktuellen Schlupffrequenz bzw. Drehzahl mit einem entsprechenden aus dem Modell gewonnenen geschätzten Wert Abweichungen des Parameters des Modells von einem regelungstechnisch gewünschten Wert festgestellt und der Parameter verändert wird, bis im Wesentlichen Übereinstimmung der aus dem Modell geschätzten und der vom Anisotropieauswerter bestimmten aktuellen Schlupffrequenz bzw. Drehzahl erzielt ist. Als regelungstechnisch gewünscht ist ein Wert für einen Parameter des Modells dann anzusehen, wenn das Modell mit diesem Wert den Zustand des Asynchronmotors für die jeweilige Anwendung im Wesentlichen korrekt beschreibt. Die gemessene Schlupffrequenz bzw. Drehzahl wird erfindungsgemäß also nicht direkt zur Regelung des Asynchronmotors eingesetzt, sondern dient dazu, dass zur Regelung verwendete Modell des Asynchronmotors besser an die jeweilige Wirklichkeit im Betrieb anzupassen.

Modelle, deren Parameter im Betrieb an tatsächlich gemessene Werte angepasst werden, werden im Allgemeinen als parameteradaptive Modelle bezeichnet. Hierbei wird aus den dem Modell zugeführten Messwerten ein Schätzwert ermittelt, im vorliegenden Fall für die Schlupffrequenz bzw. die Drehzahl und dieser Schätzwert wird mit einem Messwert verglichen, im vorliegenden Fall mit der aus der Auswertung der Anisotropie ermittelte Schlupffrequenz bzw. Drehzahl, wobei die Parameters des Modells in einem iterativen Prozess so lange verändert werden, bis Schätzwert und Messwert möglichst gut übereinstimmen. Im einfachsten Fall enthält das Modell nur einen nicht genau bekannten Parameter, im vorliegenden Fall beispielsweise die Temperatur des Rotors des Asynchronmotors, wobei dann der Anpassungsprozess relativ einfach und schnell erfolgt. Auch die mathematische Methodik zur Anpassung mehrerer Parameter eines Modells an den zeitlichen Verlauf eines Messwertes ist hinreichend bekannt.

Die vorliegende Erfindung erlaubt es daher, mit einem an sich nur für langsame Änderungen oder konstante Betriebsbedingungen geeigneten Messwert auch die Regelung transienter Vorgänge zu verbessern, indem bisher nicht genau bekannte Parameter eines zur Regelung eingesetzten Modells relativ genau bestimmt werden und damit auch bei transienten Vorgängen in der richtigen Größe zur Verfügung stehen.

In einer bevorzugten Ausführungsform der Erfindung wird der Asynchronmotor mittels eines Pulswechselrichters und einer Stromregelung, die mit einem Drehzahlregler verbunden sind, geregelt, wobei das Modell ein feldorientiertes Beobachtermodell mit mehreren variablen Parametern ist. Durch Vergleich der im Anisotropieauswerter gewonnenen aktuellen Schlupffrequenz und/oder Drehzahl mit der entsprechenden aus dem Modell geschätzten Größe werden die Parameter des Modells nacheinander, insbesondere iterativ überprüft und verändert, bis im Wesentlichen Übereinstimmung der aus dem Modell geschätzten und der vom Anisotropieauswerter bestimmten aktuellen Schlupffrequenz bzw. Drehzahl erzielt ist.

Besonders bevorzugt wird das erfindungsgemäße Verfahren in Zeitintervallen, die vorzugsweise mindestens die Länge von einem Viertel des Kehrwertes der Schlupffrequenz haben, durchgeführt, in denen der Asynchronmotor mit im Wesentlichen konstanter Drehzahl und/oder Last betrieben wird. In solchen Zeitintervallen kann die Drehzahl durch die Auswertung der Auswirkungen der Anisotropie im Magnetfeld des Rotors mit großer Genauigkeit bestimmt werden, wodurch auch der oder die Parameter des Modells mit großer Genauigkeit an die wirklichen Verhältnisse angepasst werden können. Anschließend erfolgende Betriebsänderungen beispielsweise durch Laständerungen oder Veränderungen der Drehzahl werden dann anhand eines sehr genau arbeitenden Modells durchgeführt, wobei in Phasen konstanter Drehzahl immer wieder ein Anpassen der Parameter des Modells an die Wirklichkeit wie beschrieben erfolgen kann. Dies alles erfordert keinerlei zusätzliche Sensoren am Asynchronmotor, weder einen Drehzahlgeber noch einen Temperaturfühler.

Die Schlupffrequenz eines Asynchronmotors liegt im Nennpunkt typischerweise im Bereich von bis zu 6 %, insbesondere bis zu 3 %, der Drehfeldfrequenz, so dass die durch die Anisotropie im Magnetfeld des Rotors erzeugten Schwankungen der Ströme und/oder Spannungen in der Stromversorgung des Asynchronmotors relativ gut von den meisten anderen Signalen separiert und weiter ausgewertet werden können. Bevorzugt werden daher die durch die Anisotropie erzeugten Signale mittels eines Bandpassfilters oder Tiefpassfilters separiert und ausgewertet. Dies erlaubt eine präzise Auswertung, obwohl die Signale ganz erheblich kleinere Amplituden haben als die sonstigen Signale.

Das erfindungsgemäße Verfahren ist auch auf Fälle anwendbar, in denen das Modell mindestens einen Parameter benötigt, der von nicht direkt gemessenen Größen, z.B. der Temperaturverteilung im Rotor oder Stator des Asynchronmotors, abhängt. Dieser Parameter kann in Zeitintervallen im Wesentlichen konstanter Betriebsbedingungen mittels eines Vergleiches zwischen anhand des Modells ermittelter geschätzter Schlupffrequenz oder Drehzahl und dem vom Anisotropieauswerter ermittelten aktuellen Wert der Schlupffrequenz bzw. Drehzahl nachgeführt werden, bis beide Werte übereinstimmen. Dabei kann auch die dem nachgeführten Parameter zugeordnete nicht direkt gemessene Größe angezeigt oder weiterverarbeitet werden.

Die gestellte Aufgabe wird auch gelöst durch eine Vorrichtung zur Verbesserung der Regelung eines Asynchronmotors mit einem Stator und einem eine magnetische Anisotropie aufweisenden Rotor, wobei eine Regeleinheit vorhanden ist zur Regelung des Asynchronmotors mittels eines Modells, insbesondere anhand eines feldorientierten Regelmodells, wobei die Regeleinheit mit Spannungs- und/oder Strommesswertgebern verbunden ist, die von den im Asynchronmotor auftretenden Magnetfeldern abhängige Messwerte liefern, und wobei das Modell mindestens einen variablen Parameter berücksichtigt, wobei weiter die Spannungs- und/oder Strommesswertgeber mit einem Anisotropieauswerter verbunden sind, der daraus eine aktuelle Schlupffrequenz und/oder Drehzahl des Rotors ermitteln kann. Erfindungsgemäß sind der Anisotropieauswerter und das Modell so mit einem Vergleicher verbunden, dass dieser die gewonnene aktuelle Schlupffrequenz bzw. Drehzahl mit einem entsprechenden aus dem Modell zugeführten geschätzten Wert des Modells vergleichen kann und das Ergebnis des Vergleichs zur Anpassung des Parameters im Modell in dieses rückführbar ist. Diese Struktur wird insbesondere einer üblichen feldorientierten Regelung mittels eines Beobachtermodells überlagert, wodurch das Modell ständig mit aktuellen Parametern arbeiten kann, also parameteradaptiv wird.

Bevorzugt weist die erfindungsgemäße Vorrichtung im Anisotropieauswerter Mittel zur Separierung von Signalen des Asynchronmotors auf, insbesondere Bandpassfilter oder Tiefpassfilter, zur Ausfilterung der durch die Anisotropie im Magnetfeld des Rotors erzeugten Signale.

Als besonders günstig und für Störungen unanfällig hat sich eine besondere Auswertung der durch die Anisotropie erzeugten Signale gezeigt, nämlich die Ermittlung der zeitabhängigen magnetischen Energie im Asynchronmotor. Durch die Anisotropie weist der Asynchronmotor eine in Abhängigkeit von der Lage des Rotors zum Drehfeld schwankende magnetische Energie auf, die besonders genau gemessen werden kann. Daher weist der Anisotropieauswerter bevorzugt Mittel zur Messung und Auswertung von Schwankungen der zeitabhängigen magnetischen Energie im Asynchronmotor auf. Der theoretische Hintergrund dazu wird weiter unten noch ausführlicher erläutert.

Alternativ oder kumulativ ist es vorteilhaft, wenn die durch die Anisotropie erzeugten Signale hinsichtlich des Momentanwertes des magnetischen Flusses ausgewertet werden. Durch die Bestimmung des Momentanwertes des magnetischen Flusses kann die Lage des Rotors und/oder dessen Drehzahl bestimmt werden. Dies kann insbesondere auch über eine separate Vorrichtung bevorzugt in der Stromversorgung des Asynchronmotores erfolgen.

In einer bevorzugten Ausgestaltung der Erfindung ist mindestens ein Mittel zur Separierung der durch die Anisotropie im Magnetfeld des Rotors erzeugten Signale vorhanden, welches dem Anisotropieauswerter zugeordnet ist. Da sich die Schlupffrequenz von allen anderen Frequenzen im System um mindestens eine Größenordnung unterscheidet, ist eine sehr genaue Ausfilterung der für die Schlupffrequenz wichtigen Signale insbesondere durch ein Bandpassfilter oder ein Tiefpassfilter möglich.

Neuere Untersuchungen zur erreichbaren Messgenauigkeit der oben beschriebenen Messverfahren haben gezeigt, dass auch relativ geringe Anisotropien im Rotor eines Asynchronmotors zu genauen Messungen genutzt werden können. Ein Rotor eines Asynchronmotors ist typischerweise zur Vermeidung von Wirbelströmen aus einzelnen voneinander isolierten Blechlagen aufgebaut, wobei diese Blechlagen aus speziellen, gut magnetisierbaren ferromagnetischen Legierungen bestehen. Blechlagen aus solchen Legierungen weisen praktisch immer eine Vorzugsrichtung bezüglich ihrer Magnetisierbarkeit auf. Die Vorrichtung kann daher auch beinhalten, dass die Blechlagen in ihrer Gesamtheit eine Vorzugsrichtung bezüglich der Magnetisierbarkeit des Rotors definieren, so dass sich im Betrieb ein mit dem Rotor rotierendes, anisotropes Magnetfeld ergibt, wobei der Asynchronmotor eine Stromversorgung aufweist und dem Asynchronmotor zugeführte Ströme und/oder Spannungen gemessen werden, und wobei Mittel zur selektiven Auswertung der Auswirkungen der Anisotropie auf die gemessenen Ströme und/oder Spannungen vorhanden sind. Aufbauend auf dieser überraschenden Erkenntnis beschreibt die vorliegende Erfindung eine Kombination aus einem Asynchronmotor mit einer durch die Vorzugsrichtung seiner Blechlagen vorgegebenen Anisotropie des Rotors mit Mitteln zur selektiven Auswertung der Auswirkungen dieser Anisotropie auf gemessenen Ströme und/oder Spannungen. Während im Stand der Technik angenommen wurde, dass das beschriebene Messverfahren nur anwendbar ist, wenn besondere Maßnahmen zur Erzeugung einer Anisotropie im Magnetfeld des Rotors getroffen werden, lehrt die vorliegende Erfindung, dass dies auch bei typischen, serienmäßig hergestellten Asynchronmotoren ohne Veränderungen möglich ist.

Allerdings können gemäß einer bevorzugten Ausführungsform der Erfindung auch gezielt Veränderungen am Rotor vorgenommen werden, um das Messsignal zu erhöhen. Wenn erfindungsgemäß die Anisotropie des Magnetfeldes im Betrieb durch zusätzliche Eigenschaften des Rotors verstärkt wird, ist es vorteilhaft, diese Eigenschaften so zu wählen, dass sie im Wesentlichen in der Vorzugsrichtung der Magnetisierbarkeit verstärkend wirken. So lässt sich ein besonders gut auswertbares Signal erzielen.

Besonders bevorzugt wird insbesondere eine nicht rotationssymmetrische Materialabtragung oder Materialanhäufung am Rotor zu dem gewünschten Signal führen, wenn diese so angeordnet ist, dass die dadurch verursachte Anisotropie des Magnetfeldes im Betrieb die durch die Vorzugsrichtung erzeugte Anisotropie verstärkt. Während im Stand der Technik bisher Veränderungen am Rotor vorgenommen wurden, die zu so großen Signalen führten, dass die durch die Vorzugsrichtung verursachte Anisotropie vernachlässigbar war, erlaubt die Erkenntnis der vorliegenden Erfindung, genügend starke Signale auch durch geringe Materialabtragung oder Materialanhäufung zu erreichen, wenn diese nur die durch die Vorzugsrichtung eventuell vorhandene Anisotropie verstärkt.

Besonders bevorzugt kann selbst ein relativ kleines durch die Anisotropie im Betrieb erzeugtes Signal genutzt werden, wenn der Einfluss der Anisotropie auf die magnetische Energie und/oder auf den magnetischen Fluss im Asynchronmotor gemessen wird. Die im Magnetfeld des Asynchronmotors gespeicherte Energie und/oder der magnetische Fluss schwankt mit der Lage eines anisotropen Rotors relativ zum Drehfeld und zwar proportional zu der Schlupffrequenz, insbesondere mit dem doppelten Wert der Schlupffrequenz, was sehr genau und störunanfällig gemessen werden kann. Der Proportionalitätsfaktor hängt von der Art und der Anzahl (n) der Anisotropie ab.

Die theoretischen Grundlagen, einige Ausführungsbeispiele und weitere Einzelheiten der Erfindung werden anhand der nachfolgenden Beschreibung und der Figuren näher erläutert. Es zeigen:

Fig. 1 ein schematisches Schnittbild eines Asynchronmotors mit einem Rotor mit nicht rotationssymmetrischen Eigenschaften,

Fig. 2 eine erfindungsgemäße feldorientierte Regelung eines Asynchronmotors anhand eines Beobachtermodells mit Parameterkorrektur,

Fig. 3 ein Prinzipschaltbild der erfindungsgemäßen Parameterkorrektur,

Fig. 4 eine Darstellung eines Spannungszeigers in einem orthogonalen Koordinatensystem und

Fig. 5 eine Darstellung eines Strom- und eines Spannungszeigers in einem orthogonalen Koordinatensystem.

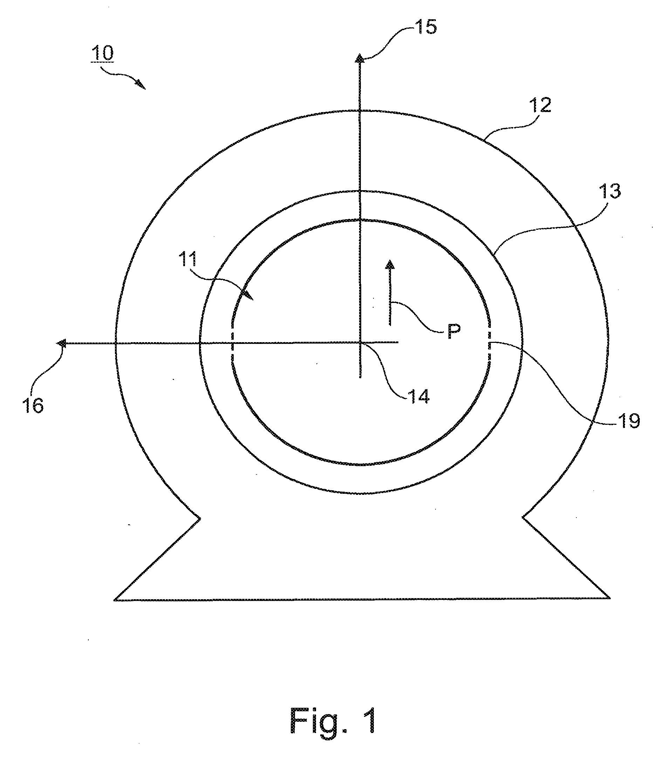

Fig. 1 zeigt schematisch einen Querschnitt durch einen Asynchronmotor 10 mit einem Stator 12 und einem aus Blechlagen 11 aufgebauten Rotor 13, der eine Anisotropie aufweist, im vorliegenden Fall durch Materialabtragungen 19 und durch eine magnetische Vorzugsrichtung P der Blechlagen 11. Die Anisotropie in diesem Ausführungsbeispiel gemäß Fig. 1 ist so gestaltet, dass der Rotor 13 zwei gegenüberliegende Bereiche mit im Wesentlichen identischen Aussparungen aufweist. Die Ausbildung von gegenüberliegenden, im Wesentlichen identischen Aussparungen weist Vorteile in Bezug auf eine gleichmäßige Rotation des Rotors 13 auf. Insbesondere werden so genannte Unwuchten im Wesentlichen vermieden. Dem Rotor 13 ist zum besseren Verständnis der folgenden theoretischen Erläuterungen ein Rotorkoordinatensystem 14 mit einer ersten Achse 15 und einer zweiten Achse 16 zugeordnet. In diesem Ausführungsbeispiel wird insbesondere in Zeitintervallen, die vorzugsweise hier mindestens die Länge von einem Viertel des Kehrwertes der Schlupffrequenz aufweisen, eine Datenaufnahme durchgeführt, wobei der Asynchronmotor 10 mit im Wesentlichen konstanter Drehzahl und/oder konstanter Last betrieben wird. Grundsätzlich ist es vorteilhaft, auf ähnliche Weise die minimale Zeit der Datenaufnahme anhand der Zahl der Anisotropien des Rotors 13 festzulegen.

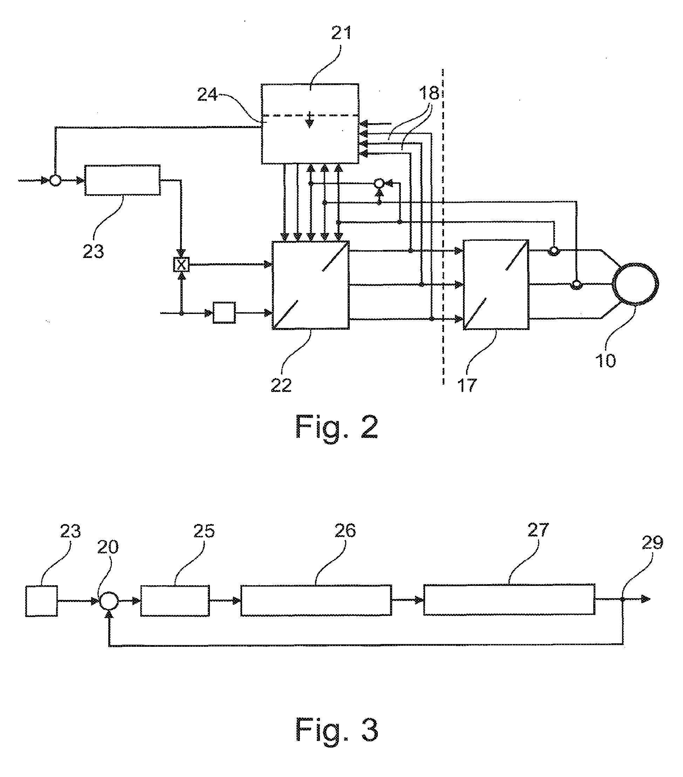

Fig. 2 zeigt in schematischer Darstellung einen Asynchronmotor 10 mit zugehörigen Peripheriegeräten, nämlich einer mit einem Pulswechselrichter 17 verbundenen Stromregelung 22, einem Drehzahlregler 23, einem sogenannten Beobachtermodell 24, welches ein an sich bekanntes Regelmodell für den Asynchronmotor 10 enthält, und mit mehreren an sich bekannten Messwertgebern 18 für Spannungs- und/oder Strommessungen. Erfindungsgemäß ist zusätzlich ein Anisotropieauswerter 21 vorhanden, der nicht dargestellte Mittel zur Separierung der durch die Anisotropie des Rotors 13 im Betrieb erzeugten Signale enthält und diese zur Ermittlung der Schlupffrequenz bzw. der Drehzahl des Rotors 13 auswertet. Dieser Anisotropieauswerter 21 wirkt erfindungsgemäß nicht direkt auf die Drehzahlregelung ein, sondern ist mit dem Beobachtermodell 24 verbunden, wie in Fig. 2 nur durch einen Pfeil angedeutet ist und anhand von Fig. 3 näher erläutert wird.

Fig. 3 zeigt, dass der vom Anisotropieauswerter 21 ermittelte aktuelle Messwert der Schlupffrequenz bzw. der Kreisfrequenz des Schlupfes, der $\omega_2$ Messwert an einer Eingabe 23 einem Vergleicher 20 zugeführt wird, der ihn mit dem vom Beobachtermodell 24 ermittelten Schätzwert, dem $\omega_2$ Schätzwert vergleicht und das Ergebnis einem Nachführer 25 zuleitet, der einen oder mehrere Parameter, die in dem Beobachtermodell 24 verwendet werden, nachführt und die gegebenenfalls veränderten Parameter einem Speicher 26 der Maschinenparameter zuleitet, so dass in einer Recheneinheit für Maschinengleichungen 27, die Teil des Beobachtermodells 24 ist, mit korrigierten Parametern, die im Wesentlichen dem aktuellen Zustand des Asynchronmotors entsprechen, gearbeitet werden kann. Daraus ergibt sich wiederum eine Ausgabe 29 eines verbesserten $\omega_2$ Schätzwertes, der wiederum dem Vergleicher 20 zugeführt wird. So kann ein iterativer Prozess dazu führen, dass mit sehr genau der Realität angepassten Parametern im Beobachtermodell gearbeitet werden kann, was auch bei transienten Vorgängen, in denen eine Auswertung der Anisotropie des Rotors 13 unter Umständen nicht möglich ist, zu einer sehr genauen Regelung führt. Im Folgenden werden noch zusätzliche Erläuterungen zum Hintergrund der Erfindung gegeben:

Eine sehr effiziente Methode zum Betrieb von Asynchronmotoren, im Folgenden auch Asynchronmaschinen genannt, ist die feldorientierte Regelung. Bei diesem Verfahren orientiert sich ein Regelkreis am magnetischen Fluss innerhalb der Maschine. Dieses kann der Rotorfluss, der Statorfluss oder der Hauptfluss sein. Durch solche Regelschemata werden sehr gute Betriebseigenschaften beispielsweise eines Antriebs erreicht. Insbesondere wird ein sehr dynamischer Betrieb ermöglicht.

Damit das Regelverfahren verwirklicht werden kann, ist es nötig, die Position des Flusses innerhalb der Maschine zu erfassen. Bei klassischen Modellen wird hierzu ein Drehgeber eingebunden. Da dies ein zusätzliches Bauelement ist, welches zahlreiche Nachteile aufweist, ist man bemüht ohne einen Drehgeber auszukommen. In vielen Fällen werden hierzu Beobachtermodelle eingesetzt. Durch eine mathematische Nachbildung der Maschinenstruktur in einem Modell sowie eine gezielte Nachführung ist es möglich, die Position des magnetischen Flusses zu erfassen und nachzuregeln.

Die Erfassung der Drehzahl ist losgelöst von der Erfassung des Magnetfeldes zu sehen. Selbst wenn die Position des Magnetfeldes exakt bekannt ist, ist noch keinerlei Rückschluss auf die Position des Rotors bzw. auf die Wellendrehzahl möglich. Der Unterschied zwischen dem magnetisch umlaufenden Feld, dem Drehfeld, und der Drehzahl der Maschine wird durch den Schlupf beschrieben. Dieser ist fürs prinzipielle Betriebsverhalten der Asynchronmaschine notwendig und stets vorhanden.

Um eine Aussage über die Höhe der Wellendrehzahl zu erhalten, werden in vielen Fällen Schätzwerte für den Schlupf angenommen. Durch den Beobachter ist die Position bzw. die Drehzahl des umlaufenden Magnetfeldes bekannt. Wird von dieser Drehfelddrehzahl der Schlupf abgezogen, so resultiert unmittelbar die Drehzahl der Welle.

Der Schätzwert des Schlupfes resultiert aus in einem Modell verwendeten Maschinengleichungen in Verbindung mit Maschinenparametern. Da diese Werte Schwankungen unterliegen ist es bei herkömmlichen Verfahren zu keinem Zeitpunkt möglich exakt den Schlupf bzw. die Drehzahl anhand des Modells zu bestimmen.

Weist ein Asynchronmotor jedoch, wie in Fig. 1 dargestellt, eine detektierbare Anisotropie auf, so ist es möglich den exakten Schlupf der Maschine messtechnisch zu erfassen. Für die Erfassung des Schlupfes ist z. B. bei einem spannungsgesteuerten System der Stromfluss in mindestens zwei der drei Stromzuleitungen des Asynchronmotors zu erfassen. An die Strommessung müssen dabei keine besonderen Anforderungen gestellt werden. Es können hierzu die ohnehin in einem typischen Umrichter vorhandenen Wandler genutzt werden. Neben der Strommessung ist es noch sehr zweckmäßig bei typischen Anordnungen die Zwischenkreisspannung zu erfassen, hierdurch kann eine Messung der einzelnen Phasenspannungen umgangen werden.

Die Fig. 2 zeigt eine mögliche Beobachterstruktur der Asynchronmaschine, auf die die vorliegende Erfindung jedoch nicht beschränkt ist. Der im rechten Bereich erkenntliche Hardware-Bereich zeigt die für den Betrieb benötigten Komponenten und die Messtechnik auf.

Die aus der Anisotropie gemessene Information des Schlupfes wird dazu genutzt, Maschinenparameter nachzuführen. Dies ist in Fig. 2 schematisch angedeutet.

Die Fig. 3 zeigt einen erfindungsgemäßen prinzipiellen Regelkreis zur Maschinenparameternachführung.

Die Kreisfrequenz $\omega_2$ Messwert ist der aktuelle Schlupffrequenzwert, welcher aus der Messung der Anisotropie gewonnen wurde. Der geschätzte Kreisfrequenzwert aus den Motorparametern ist $\omega_2$ Schätzwert. Der abgebildete Regelkreis führt die Motorparameter der Maschinengleichungen solange nach bis die Regeldifferenz zwischen beiden Signalen verschwindet. Dies hat unmittelbar zur Folge, dass die beiden Signale übereinstimmen.

Da die Drehfelddrehzahl bereits bekannt ist und nun auch der geschätzte Schlupf mit dem aktuellen Wert deckungsgleich ist, kann die Drehzahl der Maschine nun als bekannt angesehen werden.

Ändert sich die Belastung der Maschine, so resultiert eine Änderung des Schlupfes. Im idealen Fall stimmen die bereits nachgeführten Parameterwerte der Maschine nach wie vor mit den gemessenen überein, so dass eine Nachregelung nicht mehr nötig ist. Falls es zu Abweichungen kommt, so würde die erfindungsgemäße Maschinenparameternachführung gemäß Fig. 3 die Differenz wieder ausgleichen.

Durch die gewählte Struktur ist es zum einen möglich, drehgeberlos die exakte Wellendrehzahl der Maschine zu detektieren ohne einen gesonderten Drehgeber zu verwenden. Zum andern bleibt die Dynamik der Drehzahlregelung vollends erhalten und entspricht der eines feldorientiert geregelten Antriebs. Zudem werden die Maschineparameter nachgeführt, was die Beobachtbarkeit der Maschine insgesamt verbessert.

Zum besseren theoretischen Verständnis der Erfindung sollen auch die folgenden Erläuterungen dienen. Das erfindungsgemäße Verfahren beruht darauf, dass ein anisotroper Rotor vorhanden ist. Die Auswirkungen der Anisotropie im Betrieb des Asynchronmotors werden erfasst und ausgewertet. Die Fig. 1 zeigt ein prinzipielles Schnittbild eines anisotropen Rotors.

Das fest mit dem Rotor verknüpfte Rotorkoordinatensystem 14 hat eine erste Achse 15, deren Koordinatenwert im Folgenden mit d bezeichnet ist und eine Zweite Achse 16, deren Koordinatenwert mit q bezeichnet wird. Entsprechend der Achsenorientierung ist ersichtlich, dass ein in q-Richtung ausgebildeter magnetischer Fluss ein anderes Verhalten aufzeigen wird als dies in d-Richtung der Fall ist. Durch Messung der der Maschine zugeführten Strom- und Spannungsgrößen ist es möglich auf die Anisotropie zurück zu schließen und somit eine Information über die Schlupffrequenz der Maschine zu erlangen. Wird die Schwankung des inneren Momentes erfasst, so ist in dieser ein Abbild der Schlupffrequenz vorhanden. Als ursächlich hierfür sind die durch Abweichungen von der Rotationssymmetrie hervorgerufenen Reaktanz-Unterschiede genannt. Zur Aufbringung eines Magnetfeldes ist Energie erforderlich bzw. das vorhanden sein eines magnetischen Feldes ist mit Energie verbunden. Allgemein kann diese im Feld gespeicherte Energie $W_{mag}$ aus den bekannten Grundlagen der Elektrotechnik abgeleitet werden. Hiernach ist diese:

$$W_{mag} = \iiint \frac{\vec{B} \cdot \vec{H}}{2} dV \qquad (1)$$

Die Größe $\vec{B}$ beschreibt die magnetische Flussdichte und die Größe $\vec{H}$ beschreibt die magnetische Feldstärke. Das Volumen wird durch $V$ ausgedrückt. In der Elektrotechnik ist es üblich mit integralen Parametern statt mit Feldgrößen zu operieren. Bekannte Größen sind beispielsweise die Kapazität $C$, die Induktivität $L$, die Spannung $u$ oder aber auch der Strom $i$. Gemäß obigen Angaben beschreibt die Induktivität bei einem bekannten Stromfluss die im Feld gespeicherte Energie. Die Induktivität kann in diesem Zusammenhang als Proportionalitätsfaktor zur magnetischen Energie verstanden werden. Formal gilt die Gleichung:

$$W_{mag} = \frac{1}{2} L * i^2 \qquad (2)$$

Die magnetische Energie ist eine Energieform, die reversibel zu- und abgeführt werden kann. In elektrischen Netzen ist es üblich, dass diese Energie zwischen verschiedenen Verbrauchern bzw. Erzeugern hin und her schwankt. Da diese Energieform nicht direkt der Wirkleistung elektrischer Verbraucher zugewiesen werden kann wird die zeitlich auftretende magnetische Energie im Sprachgebrauch als Blindleistung verstanden.

Ist ein schwankender sinusförmiger Strom vorhanden, wie es bei Wechselstromverbrauchern üblich ist, so schwankt gemäß Gleichung (2) auch die Energie im magnetischen Feld. Der Momentanwert der magnetischen Energie ist entsprechend nicht konstant!

Bei einer Drehstrommaschine wird durch ein *n* -phasiges geometrisch zueinander versetztes Spulensystem ein möglichst ideales Spulensystem erzeugt. Üblicherweise werden zwei- bzw. dreiphasige Systeme verwendet. Unter Vernachlässigung des Nullsystems kann stets ein beliebiges *n* -phasiges System in ein zweiphasiges, orthogonales System überführt werden. Beispielsweise gilt für die Transformation eines dreiphasigen Spannungssystems in ein zweiphasiges Spannungssystem die nachstehend beschriebene Clarke-Transformation:

$$\begin{pmatrix} u_\alpha \\ u_\beta \\ u_0 \end{pmatrix} = \begin{pmatrix} \frac{2}{3} & -\frac{1}{3} & -\frac{1}{3} \\ 0 & \frac{1}{\sqrt{3}} & -\frac{1}{\sqrt{3}} \\ \frac{1}{3} & \frac{1}{3} & \frac{1}{3} \end{pmatrix} \begin{pmatrix} u_a \\ u_b \\ u_c \end{pmatrix} \qquad (3)$$

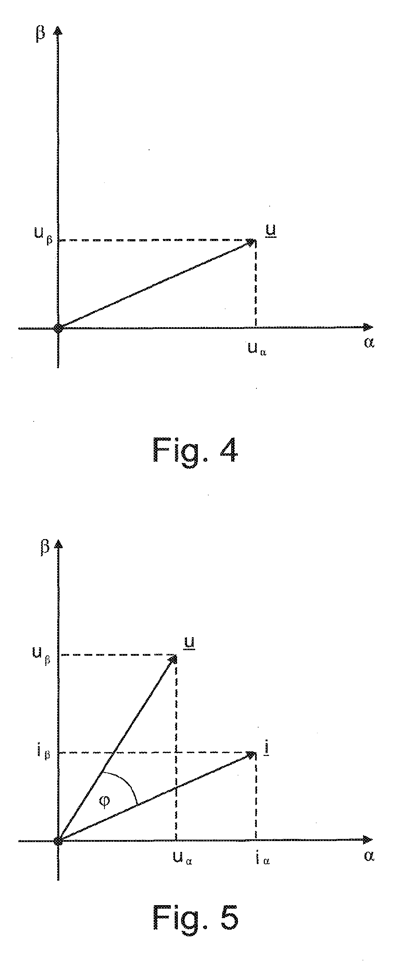

Die dem dreiphasigen System zugehörigen Größen sind *a,b,c*. Das orthogonale System wird durch die Größen , beschrieben. Zudem ergibt sich das mit o beschrieben Nullsystem. Wird obige Transformation angewendet, so kann zu jedem Zeitpunkt ein Vektor eineindeutig durch die orthogonalen $\alpha$-, $\beta$-Komponenten beschrieben werden (bei nicht vorhandenem Nullsystem, was in vielen Fällen angenommen werden kann). Die **Fig. 4** zeigt beispielsweise den Spannungsvektor *u* (Raumzeiger) zu einem beliebigen Zeitpunkt.

Bei Drehfeldmaschinen ist es üblich, dass dieser Zeiger rotiert. Beispielsweise erzeugt ein sich drehender Flusszeiger ein Drehfeld. Neben den Zeiger der Spannung kann zudem ein Stromzeiger mit eingebracht werden. Beispielsweise zeigt hierzu die **Fig. 5** ein Zeigerdiagramm mit Strom- und Spannungszeiger (*i,u*). Der Winkel zwischen dem Strom und Spannungszeiger sei mit $\varphi$ beschrieben.

Im Gegensatz zu Wechselspannungssystemen ist bei Drehspannungssystemen unter der Voraussetzung einer konstanten Last/Erzeugung ein gleichbleibender Energiefluss vorhanden. Eine Pendelung der Leistungen ist bei diesen Systemen nicht vorhanden. Beispielsweise ist der Momentanwert der Wirkleistung P gemäß obiger Darstellungen proportional zum Ausdruck:

$$P \sim |u| * |i| * \cos(\varphi) \qquad (4)$$

Für die Blindleistung gilt die Gleichung:

$$Q \sim |u| * |i| * \sin(\varphi) \qquad (5)$$

Ausgedrückt in den orthogonalen Komponenten kann der Momentanwert der Blindleistung mit nachstehender Formel bestimmt werden:

$$Q \sim (u_\beta * i_\alpha - u_\alpha * i_\beta) \qquad (6)$$

Auch hier ist bei einem idealen System keine Pendelung der Blindleistung oder ähnliches vorhanden. Vielmehr ist ein konstanter Wert vorhanden, welcher in Anlehnung an Gleichung (1) bzw. (2) die magnetische Energie innerhalb des Systems beschreibt. Wird der wirksame Strom gemäß Gleichung (2) als bekannt vorausgesetzt bzw. über einen Modellansatz errechnet kann bei bekannter magnetischer Energie (gemäß z.B. Gleichung (5), (6)) auf die wirksame Induktivität $L$ der Spulenanordnung zurückgeschlossen werden.

Es hat sich als vorteilhaft erwiesen, die im Rotor vorhandene Anisotropie dadurch zu bestimmen, dass die magentische Energie in der Maschine bzw. die sich ändernde Induktivität ausgewertet wird. Dadurch ergeben sich prinzipielle Vorteile. So ist beispielsweise die magnetische Energie, im Gegensatz zur Wirkleistung bzw. dem pendelnden inneren Moment unabhängig vom Belastungszustand. Hierunter sind der Einfluss des Massenträgheitsmomentes und der Einfluss der Schlupffrequenz zu verstehen. Zudem ist die Größe der Induktivität bzw. der Blindleistung als relativ konstant und belastungsunabhängig anzusehen, was eine technische Auswertung deutlich erleichtert.

Die obigen Betrachtungen zur Blindleistungs-, magnetische Energie- bzw. Induktivitätsauswertung beinhalten auch Auswerteverfahren, welche die durchs Feld hervorgerufenen Spannungsinduktionen beinhalten. Das grundlegende Induktionsgesetz besagt, dass die Höhe einer induzierten Spannung proportional zur Änderung des magnetischen Verkettungsflusses $\Psi$ ist. Formel gilt:

$$u = \frac{d\Psi}{dt} \qquad (7)$$

Der verkettete Fluss $\Psi$ lässt sich aus dem Produkt von Induktivität $L$ und Strom $i$ darstellen.

$$\Psi = L * i \qquad (8)$$

Wird von einem bekannten Strom $i$ ausgegangen, so kann durch Auswertung der Spannung $u$ gemäß Gleichung (7) ebenfalls ein Rückschluss auf die wirksame Induktivität $L$ erfolgen. Wie bereits beschrieben kann auf diesem Wege ein Rückschluss auf die Schlupffrequenz der Asynchronmaschine erfolgen. Die zuletzt genannten "Ansätze der Spannungsinduktion" lassen sich in Analogie zu obiger Darstellung $n$-phasiger Systeme ebenfalls vorteilhaft auf diese $n$-phasige Systeme übertragen.

Zur praktischen Realisierung oben stehender Zusammenhänge werden die genannten Ansätze mit einem oben beschriebenen Maschinenmodell in Verbindung gebracht. In diesem erfolgt schließlich die Auswertung der Schlupffrequenz. In der Simulation und in der Praxis hat sich gezeigt, dass die Auswertung des inneren Momentes mit Nachteilen verbunden ist, so ist die Höhe der auszuwertenden Schwankung vom Belastungszustand und damit dem Schlupf der Maschine abhängig. Zudem ist eine Abhängigkeit vom wirkenden Massenträgheitsmoment vorhanden. Um diesen Nachteile zu umgehen ist es vorteilhafter, eine andere Größe zur Auswertung zu verwenden.

Erfindungsgemäß wird die magnetische Energie und/oder der momentane Wert des magnetischen Flusses der Maschine zur Auswertung herangezogen. Es wird somit zu jedem Zeitpunkt die im Magnetfeld gespeicherte Energie und/oder der magnetische Fluss berechnet und dieser zur Auswertung der Schlupfinformation herangezogen. Diese Vorgehensweise umgeht obige Nachteile und ermöglicht eine von der Last und vom Massenträgheitsmoment unabhängige Auswertung der Schlupffrequenz. Es kann zudem zu jedem Zeitpunkt eine Auswertung des magnetischen Flusses stattfinden.

Um diese magnetische Energie bzw. den Fluss auszuwerten bietet es sich in an sich bekannter Weise an, die Maschine mit Raumzeigern abzubilden. Üblich ist es, die Raumzeigertransformation dazu zu nutzen die Wirkleistung bzw. das wirkende Moment der Maschine zu errechnen. Mit demselben Ansatz ist es jedoch auch möglich, den Momentanwert der magnetischen Energie, der Blindleistung, des Flusses innerhalb der Maschine zu erfassen.

**Bezugszeichenliste**

| | |
|---|---|
| 10 | Asynchronmotor |
| 11 | Blechlagen |
| 12 | Stator |
| 13 | anisotroper Rotor |
| 14 | Rotorkoordinatensystem |
| 15 | erste Achse |
| 16 | zweite Achse |

17  Pulswechselrichter
18  Spannungs-/Strommesswertgeber
19  Materialabtragung
20  Vergleicher
21  Anisotropieauswerter
22  Stromregelung
23  Drehzahlregler
24  Beobachtermodell
25  Nachführer
26  Speicher der Maschinenparameter
27  Recheneinheit für Maschinengleichungen
28  Eingabe $\omega_2$ Messwert
29  Ausgabe $\omega_2$ Schätzwert

P  (magnetische) Vorzugsrichtung


**Patentansprüche**

1.  Verfahren zur Verbesserung der Regelung eines Asynchronmotors (10) mit einem Stator (12) und einem eine magnetische Anisotropie aufweisenden Rotor (13), wobei eine Drehzahl bzw. eine Schlupffrequenz des Asynchronmotors (10) mittels eines Modells geregelt wird, insbesondere durch ein feldorientiertes Regelmodell, welchem zeitabhängige Spannungs- und/oder Strommesswerte, die abhängig von den im Asynchronmotor (10) auftretenden Magnetfeldern sind, zugeführt werden, und wobei das Modell mindestens einen variablen Maschinenparameter berücksichtigt, **dadurch gekennzeichnet, dass** die durch die magnetische Anisotropie des Rotors (13) in den Strom- und/oder Spannungsmesswerten erzeugten Schwankungen in einem Anisotropieauswerter (21) ausgewertet werden und daraus eine aktuelle Schlupffrequenz und/oder Drehzahl des Rotors (13) ermittelt wird, wobei durch Vergleich der im Anisotropieauswerter (21) gewonnenen aktuellen Schlupffrequenz bzw. Drehzahl mit einem entsprechenden aus dem Modell gewonnenen geschätzten Wert der Drehzahl bzw. Schlupffrequenz Abweichungen des Maschinenparameters des Modells von einem regelungstechnisch gewünschten Wert festgestellt und der Maschinenparameter im Modell verändert wird, bis im Wesentlichen Übereinstimmung der aus dem Modell geschätzten und der vom Anisotropieauswerter (21) bestimmten aktuellen Schlupffrequenz bzw. Drehzahl erzielt ist.

2.  Verfahren nach Anspruch 1, wobei der Asynchronmotor (10) mittels eines Pulswechselrichters (17) und einer Stromregelung (22), die mit einem Drehzahlregler (23) verbunden sind, geregelt wird, wobei weiter das Modell ein feldorientiertes Beobachtermodell (24) mit mehreren variablen Maschinenarametern ist,
    **dadurch gekennzeichnet, dass** durch Vergleich der im Anisotropieauswerter (21) gewonnenen aktuellen Schlupffrequenz und/oder Drehzahl mit der entsprechenden aus dem Beobachtermodell (24) geschätzten Größe die Maschinenparameter des Modells nacheinander, insbesondere iterativ, überprüft und verändert werden, bis im Wesentlichen Übereinstimmung der aus dem Beobachtermodell (24) und der vom Anisotropieauswerter (21) bestimmten Schlupffrequenz bzw. Drehzahl erzielt ist.

3.  Verfahren nach Anspruch 1 oder 2, **dadurch gekennzeichnet, dass** das Verfahren wiederholt in Zeitintervallen, die vorzugsweise mindestens die Länge von einem Viertel des Kehrwertes der Schlupffrequenz haben, durchgeführt wird, in denen der Asynchronmotor (10) mit im Wesentlichen konstanter Drehzahl und/oder konstanter Last betrieben wird.

4.  Verfahren nach Anspruch 1, 2 oder 3, **dadurch gekennzeichnet, dass** durch die Anisotropie im Magnetfeld des Rotors (13) erzeugten Schwankungen der Strom- und/oder Spannungsmesswerte im Anisotropieauswerter (21) separiert werden, insbesondere durch Bandpassfilter oder Tiefpassfilter, und dann weiter ausgewertet werden.

5.  Verfahren nach einem der vorhergehenden Ansprüche, wobei das Modell mindestens einen Maschinenparameter benötigt, der von nicht direkt gemessenen Größen, z.B. der Temperaturverteilung im Rotor (13) und/oder Stator (12) des Asynchronmotors (10), abhängt, **dadurch gekennzeichnet, dass** dieser Maschinenparameter in Zeitintervallen im Wesentlichen konstanter Betriebsbedingungen mittels eines Vergleiches zwischen anhand des Modells ermittelter geschätzter Schlupffrequenz oder Drehzahl und dem vom Anisotropieauswerter (21) ermittelten aktuellen Wert der Schlupffrequenz bzw. Drehzahl durch einen Nachführer (25) nachgeführt wird, bis beide Werte übereinstimmen.

**6.** Verfahren nach Anspruch 5, **dadurch gekennzeichnet, dass** die dem nachgeführten Maschinenparameter zugeordnete nicht direkt gemessene Größe angezeigt oder weiterverarbeitet wird.

**7.** Vorrichtung zur Verbesserung der Regelung eines Asynchronmotors (10) mit einem Stator (12) und einem eine magnetische Anisotropie aufweisenden Rotor (13), wobei eine Regeleinheit vorhanden ist zur Regelung der Drehzahl bzw. Schlupffrequenz des Asynchronmotors (10) mittels eines Modells, insbesondere anhand eines feldorientierten Beobachtermodells (24), wobei die Regeleinheit mit Spannungs- und/oder Strommesswertgebern (18) verbunden ist, die abhängig von im Asynchronmotor (10) auftretenden Magnetfeldern Messwerte liefern, und wobei das Modell mindestens einen variablen Maschinenparameter berücksichtigt, **dadurch gekennzeichnet, dass** die Spannungs- und/oder Strommesswertgeber mit einem Anisotropieauswerter (21) verbunden sind, der daraus eine aktuelle Schlupffrequenz und/oder Drehzahl des Rotors (13) ermitteln kann, wobei
der Anisotropieauswerter (21) und das Modell so mit einem Vergleicher (20) verbunden sind, dass die gewonnene aktuelle Schlupffrequenz bzw. Drehzahl mit einem entsprechenden aus dem Modell zugeführten geschätzten Wert der Drehzahl bzw. Schlupffrequenz des Modells vergleichen kann und das Ergebnis des Vergleichs zur Anpassung des Maschinenparameters im Modell in dieses rückführbar ist.

**8.** Vorrichtung nach Anspruch 7, **dadurch gekennzeichnet, dass** der Anisotropieauswerter (21) Mittel zur Separierung von Signalen des Asynchronmotors (10), insbesondere Bandpassfilter, zur Ausfilterung der durch die Anisotropie im Magnetfeld des Rotors (13) erzeugten Signale vorhanden aufweist.

**9.** Vorrichtung nach Anspruch 7 oder 8, **dadurch gekennzeichnet, dass** der Anisotropieauswerter (21) Mittel zur Messung und Auswertung zumindest eines der folgenden Parameter:

    a) der im Asynchronmotor in Abhängigkeit von der Zeit gespeicherten magnetischen Energie und
    b) des magnetischen Flusses

aufweist.

**10.** Vorrichtung nach einem der Ansprüche 7 bis 9, insbesondere zur Durchführung eines Verfahrens nach einem der Ansprüche 1 bis 6, wobei der Asynchronmotor (10) einen aus einzelnen ferromagnetischen Blechlagen (11) aufgebauten Rotor (13) aufweist, **dadurch gekennzeichnet, dass** die Blechlagen in ihrer Gesamtheit eine Vorzugsrichtung (P) bezüglich der Magnetisierbarkeit des Rotors (13) definieren, so dass sich im Betrieb ein mit dem Rotor (13) rotierendes, anisotropes Magnetfeld ergibt..

**11.** Vorrichtung nach Anspruch 10, **dadurch gekennzeichnet, dass** die Anisotropie des Magnetfeldes im Betrieb durch zusätzliche Eigenschaften (19) des Rotors (13) verstärkt ist, wobei diese Eigenschaften (19) im Wesentlichen in der Vorzugsrichtung der Magnetisierbarkeit verstärkend wirken.

**12.** Vorrichtung nach Anspruch 11, **dadurch gekennzeichnet, dass** der Rotor (13) als zusätzliche Eigenschaft (19) wenigstens eine nicht rotationssymmetrische Materialabtragung (19) oder Materialanhäufung aufweist, die so angeordnet ist, dass die dadurch verursachte Anisotropie des Magnetfeldes im Betrieb die durch die Vorzugsrichtung erzeugte Anisotropie verstärkt.

**13.** Vorrichtung nach einem der Ansprüche 10 bis 12, **dadurch gekennzeichnet, dass** Mittel zur Bestimmung zumindest eines der folgenden Parameter:

    a) der im Asynchronmotor in Abhängigkeit von der Zeit gespeicherten magnetischen Energie und
    b) des magnetischen Flusses

vorhanden sind und zum Separieren eines Anteil, der durch die Anisotropie des Rotors (13) erzeugt wird, mit niedrigerer Frequenz als die übrigen Anteile.

**14.** Vorrichtung nach Anspruch 13, **dadurch gekennzeichnet, dass** Mittel (21) zur Bestimmung der Schlupffrequenz und/oder der Drehzahl aus dem separierten durch die Anisotropie erzeugten Anteil der magnetischen Energie vorhanden sind.

**Claims**

1.  Method for improving the control of an asynchronous motor (10) with a stator (12) and a rotor (13) having magnetic anisotropy, wherein a rotational speed or a slip frequency of the asynchronous motor (10) is controlled by means of a model, in particular by a field-oriented control model to which time-dependent voltage measurement values and/or current measurement values, which are dependent on the magnetic fields occurring in the asynchronous motor (10), are fed, and wherein the model takes into account at least one variable machine parameter, **characterized in that** the fluctuations in an anisotropy evaluator (21), which are generated by the magnetic anisotropy of the rotor (13) in the current measurement values and/or voltage measurement values, are evaluated and on the basis thereof a current slip frequency and/or rotational speed of the rotor (13) are/is determined,
    wherein by comparing the current slip frequency or rotational speed acquired in the anisotropy evaluator (21) with a corresponding estimated value of the rotational speed or slip frequency acquired from the model deviations in the machine parameter of the model from a value which is desired in terms of control technology are detected and the machine parameter in the model is changed until essential correspondence between the slip frequency or rotational speed which is estimated on the basis of the model and the current slip frequency or rotational speed which is determined by the anisotropy evaluator (21) is achieved.

2.  Method according to Claim 1, wherein the asynchronous motor (10) is controlled by means of a pulse inverter (17) and a power controller (22) which are connected to a rotational speed controller (23), wherein the model is also a field-oriented observer model (24) with a plurality of variable machine parameters,
    **characterized in that** by comparing the current slip frequency and/or rotational speed acquired in the anisotropy evaluator (21) with the corresponding variable estimated on the basis of the observer model (24) the machine parameters of the model are successively, in particularly iteratively, checked and changed until essential correspondence between the slip frequency or rotational speed determined on the basis of the observer model (24) and the slip frequency or rotational speed determined by the anisotropy evaluator (21) is achieved.

3.  Method according to Claim 1 or 2, **characterized in that** the method is carried out repeatedly at time intervals which preferably have at least the length of a quarter of the reciprocal value of the slip frequency, in which time intervals the asynchronous motor (10) is operated with an essentially constant rotational speed and/or constant load.

4.  Method according to Claim 1, 2 or 3, **characterized in that** fluctuations in the current measurement values and/or voltage measurement values which are generated by the anisotropy in the magnetic field of the rotor (13) are separated in the anisotropy evaluator (21), in particular by means of bandpass filters or low-pass filters, and are then evaluated further.

5.  Method according to one of the preceding claims, wherein the model requires at least one machine parameter which depends on variables which are not measured directly, for example the temperature distribution in the rotor (13) and/or stator (12) of the asynchronous motor (10), **characterized in that** this machine parameter is tracked at time intervals of essentially constant operating conditions by means of a comparison between an estimated slip frequency or rotational speed which is determined on the basis of the model and the current value of the slip frequency or rotational speed which is determined by the anisotropy evaluator (21), by means of a tracking device (25), until both values correspond.

6.  Method according to Claim 5, **characterized in that** the variable which is assigned to the tracked machine parameter and is not measured directly is displayed or processed further.

7.  Device for improving the control of an asynchronous motor (10) with a stator (12) and a rotor (13) having magnetic anisotropy, wherein a control unit is present for controlling the rotational speed and slip frequency of the asynchronous motor (10) by means of a model, in particular on the basis of a field-oriented observer model (24), wherein the control unit is connected to voltage measurement value signal transmitters (18) and/or current measurement value signal transmitters (18) which supply measurement values as a function of magnetic fields occurring in the asynchronous motor (10), and wherein the model takes into account at least one variable machine parameter, **characterized in that** the voltage measurement value signal transmitters and/or the current measurement value signal transmitters are connected to an anisotropy evaluator (21) which can determine on the basis thereof a current slip frequency and/or rotational speed of the rotor (13), wherein the anisotropy evaluator (21) and the model are connected to a comparator (20) in such a way that the acquired current slip frequency or rotational speed can be compared with a corresponding estimated value of the rotational speed or slip frequency of the model, fed from the model, and the result of the comparison can be fed back into the model in order to adapt the machine parameter in the model.

8. Device according to Claim 7, **characterized in that** the anisotropy evaluator (21) has available means for separating signals of the asynchronous motor (10), in particular bandpass filters, for filtering out the signals generated by the anisotropy in the magnetic field of the rotor (13).

9. Device according to Claim 7 or 8, **characterized in that** the anisotropy evaluator (21) has means for measuring and evaluating at least one of the following parameters:

  a) the magnetic energy stored in the asynchronous motor as a function of time, and
  b) the magnetic flux.

10. Device according to one of Claims 7 to 9, in particular for carrying out a method according to one of Claims 1 to 6, wherein the asynchronous motor (10) has a rotor (13) which is constructed from individual ferromagnetic sheet metal layers (11), **characterized in that** the sheet metal layers define in their entirety a preferred direction (P) with respect to the magnetizabilty of the rotor (13), with the result that during operation an anisotropic magnetic field which rotates with the rotor (13) is produced.

11. Device according to Claim 10, **characterized in that** the anisotropy of the magnetic field is amplified during operation by additional properties (19) of the rotor (13), wherein these properties (19) act in an amplifying fashion essentially in the preferred direction of the magnetizability.

12. Device according to Claim 11, **characterized in that** the rotor (13) has, as an additional property (19), at least one non-rotationally symmetrical area (19) where material is removed or an area where material is added, said area being arranged in such a way that the anisotropy of the magnetic field which is caused as a result amplifies during operation the anisotropy which is generated by the preferred direction.

13. Device according to one of Claims 10 to 12, **characterized in that** means are present for determining at least one of the following parameters:

  a) the magnetic energy stored in the asynchronous motor as a function of time,
  b) and the magnetic flux,

and for separating off a portion, generated by the anisotropy of the rotor (13), with a lower frequency than the other portions.

14. Device according to Claim 13, **characterized in that** means (21) are present for determining the slip frequency and/or the rotational speed from the separated-off portion of the magnetic energy which is generated by the anisotropy.


**Revendications**

1. Procédé d'amélioration du réglage d'un moteur asynchrone (10) avec un stator (12) et un rotor (13) présentant une anisotropie magnétique, une vitesse de rotation et/ou une fréquence de glissement du moteur asynchrone (10) étant réglée à l'aide d'un modèle, notamment par un modèle de réglage orienté par champ auquel sont amenées des valeurs de mesure de tension et/ou de courant dépendant du temps et dépendant des champs magnétiques se produisant dans le moteur asynchrone (10) et le modèle prenant en compte au moins un paramètre de machine variable, **caractérisé en ce que** les écarts dans les valeurs de mesure de tension et/ou de courant produits par l'anisotropie magnétique du rotor (13) sont analysés dans un analyseur d'anisotropie (21) et qu'on en déduit une fréquence de glissement et/ou une vitesse de rotation actuelles du rotor (13), la comparaison de la fréquence de glissement et/ou de la vitesse de rotation actuelles obtenues dans l'analyseur d'anisotropie (21) avec une valeur, correspondante estimée obtenue à partir du modèle, de la vitesse de rotation et/ou de la fréquence de glissement permet de constater des écarts du paramètre de machine du modèle par rapport à une valeur souhaitée en technique de réglage et le paramètre de machine étant modifié dans le modèle jusqu'à atteindre pour l'essentiel la correspondance de la fréquence de glissement et/ou de la vitesse de rotation actuelles estimées à partir du modèle et définies par l'analyseur d'anisotropie (21).

2. Procédé selon la revendication 1, le moteur asynchrone (10) étant réglé à l'aide d'un onduleur à impulsions (17) et d'un réglage du courant (22) reliés à un régulateur de vitesse de rotation (23), le modèle étant en sus un modèle d'observateur (24) orienté par champ avec plusieurs paramètres de machine variables, **caractérisé en ce que** la comparaison de la fréquence de glissement et/ou de la vitesse de rotation actuelles obtenues dans l'analyseur d'anisotropie (21) avec l'ordre de grandeur correspondant estimé à partir du modèle d'observateur (24) permet de contrôler ou de modifier successivement, notamment itérativement, les paramètres de machine du modèle, jusqu'à atteindre pour l'essentiel la correspondance de la fréquence de glissement et/ou de la vitesse de rotation définies par l'analyseur d'anisotropie (21) et à partir du modèle d'observateur (24).

3. Procédé selon la revendication 1 ou 2, **caractérisé en ce que** le procédé est mis en oeuvre de façon répétée à des intervalles de temps ayant de préférence au moins la longueur d'un quart de la valeur inverse de la fréquence de glissement et pour lesquels le moteur asynchrone (10) est pour l'essentiel entraîné à une vitesse de rotation constante et/ou à une charge constante.

4. Procédé selon la revendication 1, 2 ou 3, **caractérisé en ce que** l'anisotropie dans le champ magnétique du rotor (13) permet de séparer les écarts produits des valeurs de mesure de tension et/ou de courant dans l'analyseur d'anisotropie (21), notamment par filtre passe-bande ou filtre passe-bas, avant de les analyser en sus.

5. Procédé selon l'une quelconque des revendications précédentes, le modèle nécessitant au moins un paramètre de machine dépendant d'ordres de grandeur non directement mesurés, par exemple de la répartition de la température dans le rotor (13) et/ou le stator (12) du moteur asynchrone (10), **caractérisé en ce que** ce paramètre de machine est suivi par un système suiveur (25) à intervalles de temps donnés dans des conditions de fonctionnement pour l'essentiel constantes, à l'aide d'une comparaison entre la fréquence de glissement ou la vitesse de rotation estimées déterminées à l'aide du modèle et la valeur actuelle, déterminée par l'analyseur d'anisotropie (21), de la fréquence de glissement et/ou de la vitesse de rotation, jusqu'à ce que les deux valeurs correspondent.

6. Procédé selon la revendication 5, **caractérisé en ce que** l'ordre de grandeur associé au paramètre de machine suivi et non directement mesuré est affiché ou en sus transformé.

7. Dispositif d'amélioration du réglage d'un moteur asynchrone (10) avec un stator (12) et un rotor (13) présentant une anisotropie magnétique, une unité de réglage étant présente pour le réglage de la vitesse de rotation et/ou de la fréquence de glissement du moteur asynchrone (10) à l'aide d'un modèle, notamment à l'aide d'un modèle d'observateur (24) orienté par champ, l'unité de réglage étant reliée à des capteurs de valeur de mesure de tension et/ou de courant (18) fournissant des valeurs de mesure en fonction des champs magnétiques survenant dans le moteur asynchrone (10) et le modèle tenant compte d'au moins un paramètre de machine variable, **caractérisé en ce que** les capteurs de valeur de mesure de tension et/ou de courant sont reliés à un analyseur d'anisotropie (21) permettant de déduire une fréquence de glissement et/ou une vitesse de rotation actuelles du rotor (13), l'analyseur d'anisotropie (21) et le modèle étant reliés de telle sorte à un comparateur (20) que la fréquence de glissement et/ou la vitesse de rotation actuelles obtenues peuvent être comparées à une valeur correspondante, estimée provenant du modèle, de la vitesse de rotation et/ou de la fréquence de glissement du modèle et que le résultat de la comparaison peut être ramené dans celui-ci pour l'adaptation du paramètre de machine dans le modèle.

8. Dispositif selon la revendication 7, **caractérisé en ce que** l'analyseur d'anisotropie (21) comporte des moyens de séparation de signaux du moteur asynchrone (10), notamment un filtre passe-bande, pour l'extraction des signaux présents produits par l'anisotropie dans le champ magnétique du rotor (13).

9. Dispositif selon la revendication 7 ou 8, **caractérisé en ce que** l'analyseur d'anisotropie (21) comporte des moyens de mesure et d'analyse d'au moins un des paramètres suivants :

    a) l'énergie magnétique accumulée dans le moteur asynchrone en fonction du temps ;
    b) le flux magnétique.

10. Dispositif selon l'une quelconque des revendications 7 à 9, notamment de mise en oeuvre d'un procédé selon l'une quelconque des revendications 1 à 6, le moteur asynchrone (10) comportant un rotor (13) structuré à partir de couches de tôle (11) ferromagnétiques individuelles, **caractérisé en ce que** les couches de tôle définissent dans leur totalité une direction préférée (P) par rapport à la capacité de magnétisation du rotor (13), de façon à obtenir en fonctionnement un champ magnétique anisotrope tournant avec le rotor (13).

11. Dispositif selon la revendication 10, **caractérisé en ce que** l'anisotropie du champ magnétique est renforcée en fonctionnement par des propriétés (19) supplémentaires du rotor (13), ces propriétés (19) ayant pour l'essentiel un effet renforçant dans la direction préférée de la capacité de magnétisation.

**12.** Dispositif selon la revendication 11, **caractérisé en ce que** le rotor (13) présente comme propriété (19) supplémentaire au moins un retrait de matière (19) ou une accumulation de matière non symétriques en rotation disposés de telle sorte que l'anisotropie ainsi provoquée du champ magnétique renforce en fonctionnement l'anisotropie produite par la direction préférée.

**13.** Dispositif selon l'une quelconque des revendications 10 à 12, **caractérisé par** la présence de moyens de détermination d'au moins un des paramètres suivants :

a) l'énergie magnétique accumulée dans le moteur asynchrone en fonction du temps ;
b) le flux magnétique ; et

de moyens de séparation d'une partie produite par l'anisotropie du rotor (13), avec une fréquence inférieure aux parties restantes.

**14.** Dispositif selon la revendication 13, **caractérisé par** la présence de moyens (21) de détermination de la fréquence de glissement et/ou de la vitesse de rotation à partir de la partie de l'énergie magnétique séparée produite par l'anisotropie.

Fig. 1

Fig. 2

Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5729113 A
- US 7180262 B2

- JP 1218343 A

**In der Beschreibung aufgeführte Nicht-Patentliteratur**

- **RÜTER, M. ; BAADER, U. ; OBERSCHELP, W. ; SCHRÖDER, G.** Eine geberlose Drehzahlerfassung für Asynchronmaschinen. *VDE/VDI-Tagung,* September 2008

- **RÜTER, MARKUS ; BAADER, UWE ; OBER-SCHELP, WOLFGANG ; SCHRÖDER, GÜNTER.** A sensorless speed aquisition method for induction maschines. *ISIE 2009 - IEEE International Symposion on Industrial Electronics,* 05. Juli 2009